# EUROPÄISCHE PATENTSCHRIFT

(11) **EP 1 154 612 B1**
(45) Veröffentlichungstag und Bekanntmachung des Hinweises auf die Patenterteilung: **09.08.2006**
(21) Anmeldenummer: 01110677.0
(22) Anmeldetag: 02.05.2001
(51) Int. Cl.: H04M 1/02

(54) **Mobiltelefon mit Akkufach**
Mobile telephone with battery pack
Téléphone mobile avec compartiment de batterie

(30) Priorität: 10.05.2000 DE 10022702
(43) Veröffentlichungstag der Anmeldung: 14.11.2001
(73) Patentinhaber: BenQ Corporation, Gueishan Taoyuan 333 (TW)
(72) Erfinder: Beeker, Udo, 46509 Xanten (DE); Kremers, Arndt, 52066 Aachen (DE); Voigt, Christian, 46509 Xanten (DE)
(74) Vertreter: Epping - Hermann - Fischer

(56) Entgegenhaltungen:
- WO-A-98/57383
- US-A- 5 955 700
- PATENT ABSTRACTS OF JAPAN vol. 013, no. 371 (E-807), 17. August 1989 (1989-08-17) & JP 01 125027 A (MATSUSHITA ELECTRIC IND CO LTD), 17. Mai 1989 (1989-05-17)

## Beschreibung

Die vorliegende Erfindung betrifft ein Mobiltelefon mit einem Akkufach, welches mittels eines Akkufach-Deckels verschließbar ist.

Moderne Mobiltelefone werden nicht nur im Büro, im Auto und auf der Strasse, sondern in zunehmendem Maße auch während unterschiedlichster Freizeitaktivitäten benutzt, bei denen die Gefahr besteht, dass Festkörper, Staub und Feuchtigkeit in die Geräte eindringen können.

Ziel der Mobiltelefon-Entwicklung ist es daher, Mobiltelefone zu entwickeln, welche einer IP-Schutzklasse zugeordnet werden können. Die IP(= International Protection)-Schutzklasse klassifiziert die Systeme entsprechend ihres Schutzgrades gegen das Eindringen von Festkörpern, Staub und Feuchtigkeit. Die IP-Bezeichnung besteht aus zwei Ziffern, wobei die erste Ziffer den Schutzgrad gegen Staub und die zweite Ziffer den Schutzgrad gegen Feuchtigkeit angibt. Die erste Ziffer kann von 0 bis 6 und die zweite Ziffer von 0 bis 8 variieren. Dabei entspricht die Ziffer 0 keinem Schutzgrad. Zum Beispiel bedeutet eine 5 als erste Ziffer, dass das Gerät gegen Staub geschützt ist, und eine 6 als erste Ziffer bedeutet, dass das Gerät vollkommen staubdicht ist. Eine 4 als zweite Ziffer besagt, dass das Gerät gegen Spritzwasser geschützt ist, während zum Beispiel eine 5 als zweite Ziffer aussagt, dass das Gerät gegen einen Wasserstrahl geschützt ist.

Akkufach-Deckel von Mobiltelefonen der eingangs genannten Art besitzen oft Verschluss-Systeme, die den Deckel bei einer 90°-Drehung verriegeln. Geschlossen werden diese Verschlüsse immer im Uhrzeigersinn und entsprechend umgekehrt geöffnet. Die Dichtwirkung wird durch Stauchen eines Gummipfropfens erreicht. Diese Verschlüsse sind stets mehrteilig und durch den dadurch bedingten Montageaufwand teuer.

Ein ähnliches Beispiel kann in Dokument US-A- 5 955 700 gefunden werden.

Aufgabe der vorliegenden Erfindung ist es, ein Mobiltelefon mit einem Akkufach-Deckel anzugeben, der ein einteiliges, wasserdichtes Verschluss-System aufweist.

Diese Aufgabe wird für das eingangs genannte Mobiltelefon dadurch gelöst, dass der Akkufach-Deckel eine Öffnung aufweist, in die ein Verschlussteil in einer vorgegebenen Stellung einsteckbar ist, dass das Verschlussteil aus einem Schaft mit einem Kopf besteht, wobei an dem freien Ende des Schafts gegenüberliegende Rastnocken, die in entsprechende Aufnahmen am Mobiltelefongehäuse einrasten, angeordnet sind und unterhalb des Kopfes ein Dichtring und in Längsrichtung des Schafts verlaufende Positioniernocken integriert sind, und dass die Öffnung eine Senkung zur Aufnahme des Dichtrings und Positioniernuten für die Positioniernocken aufweist.

Das erfindungsgemäße Mobiltelefon weist einen wasserdichten einteiligen Verschluss auf, der sowohl im Rechts- als auch im Linkslauf zu betätigen ist, und der eine gerige Bauhöhe besitzt.

Weitere zweckmäßige Weiterbildungen und Ausgestaltungen der Erfindung ergeben sich aus den Unteransprüchen, sowie aus der nachfolgenden Beschreibung eines Ausführungsbeispiels anhand der Zeichnung.

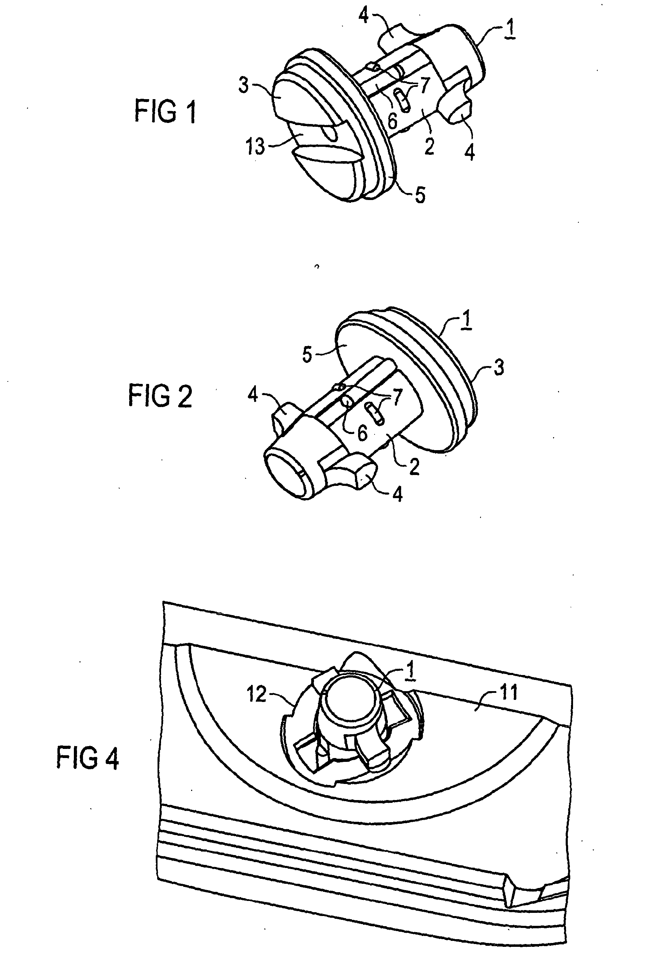

Es zeigen
- Figur 1: eine perspektivische Ansicht eines erfindungsgemäßen Verschlusses,
- Figur 2: eine andere perspektivische Ansicht des erfindungsgemäßen Verschlusses,

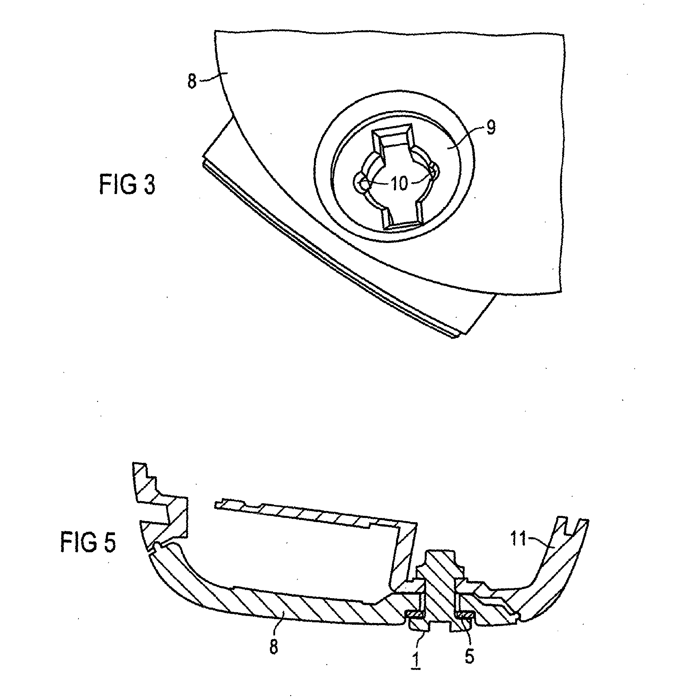

- Figur 3: eine perspektivische Ansicht der Kopfsenkung im zu fügenden Teil,
- Figur 4: eine perspektivische Ansicht von unten auf das Ende des erfindungsgemäßen Verschlusses im verschlossenen Zustand und
- Figur 5: einen Querschnitt durch ein erfindungsgemäßes Verschluss-System.

Das erfindungsgemäße Verschluss-System besteht aus dem Verschluss 1 und der Öffnung mit der Kopfsenkung 9 am zu fügenden Teil 8, dem Akkufach-Deckel, und aus der Gegenseite 12 am Mobiltelefongehäuse.

Der Verschluss 1 selbst besteht aus einem Schaft 2 mit einem Kopf 3. Am freien Ende des Schafts 2 sind gegenüberliegend Rastnocken 4 angeordnet.

Unterhalb des Kopfes 3 ist eine als Dichtring ausgeführte Dichtung 5 integriert, die zusätzlich einen Positioniernocken 6 besitzt. Die Dichtung 5 und der Positionsiernocken 6 sind aus einem weichen, gummiähnlichen Material, während der übrige Teil des Verschlusses 1, das heisst, der Schaft 2, der Kopf 3 und die Rastnocken 4 aus hochfestem Kunststoff bestehen.

Die Gegenseite besteht aus einer Verschlussöffnung, welche eine Senkung 9 und Positionierungsnuten 10 in dem zu fügenden Teil 8, dem Akkufach-Deckel, aufweist. Die Verschlusskrone 12 liegt auf der Innenseite des Mobiltelefongehäuseteils 11.

Der Verschluss 1 kann durch Verdrehen zwei stabile Lagen einnehmen, die offene/ungefügte oder die geschlossene/verrastete Lage. Die offene Lage wird durch die Positionsnase am Verschluss 1 spürbar angezeigt. Das Verrasten ist in beiden Richtungen möglich. Die Dichtung 5 am Verschluss 1 füllt die Senkung 9 am zufügenden Teil vollständig aus. Durch das Verrasten des Verschlusses 1 wird die Dichtkraft in axialer Richtung auf die Dichtung 5 gebracht.

Zusätzlich können am Verschluss 1 Verliersicherungen 7 integriert werden. Der Verschluss 1 wird durch eine in den Schlitz 13 eingesetzte Münze betätigt.

Der Vorteil des erfindungsgemäßen Verschluss-Systems ist darin zu sehen, dass das Verschluss-System wasserdicht ist, dass es aus nur einem beweglichen Teil besteht und dabei die Bedienung des Verschlusses 1 drehsinnunabhängig ist.

## Patentansprüche

1. Mobiltelefon mit einem Akkufach, welches mittels eines Akkufach-Deckels verschließbar ist,
**dadurch gekennzeichnet,**
**dass** der Akkufach-Deckel (8) eine Öffnung aufweist, in die ein Verschlussteil (1) in einer vorgegebenen Stellung einsteckbar ist,
**dass** das Verschlussteil (1) aus einem Schaft (2) mit einem Kopf (3) besteht, wobei an dem freien Ende des Schafts (3) gegenüberliegende Rastnocken (4), die in entsprechende Aufnahmen am Mobiltelefongehäuse einrasten, angeordnet sind und unterhalb des Kopfes (3) ein Dichtring (5) und in Längsrichtung des Schafts (2) verlaufende Positioniernocken (6) integriert sind, und
**dass** die Öffnung eine Senkung (9) zur Aufnahme des Dichtrings (5) und Positioniernuten (10) für die Positioniernocken (6) aufweist.

2. Mobiltelefon nach Anspruch 1,
**dadurch gekennzeichnet**
**dass** der Dichtring (5) und die Positioniernocken (6) aus einem weichen, gummiähnlichen Material bestehen.

3. Mobiltelefon nach Anspruch 1 oder 2,
**dadurch gekennzeichnet**
**dass** am Schaft (2) in Umfangsrichtung verlaufende Verliersicherungs-Nocken (7) angeordnet sind.

## Claims

1. Mobile telephone with a battery compartment which can be fastened by means of a battery compartment cover.
**characterized in that**
the battery compartment cover (8) features an opening into which a fastening part (1) can be inserted in a predetermined position,
the fastening part (1) consists of a shaft (2) with a head (3) with opposing locating cams (4) being arranged at the free end of the shaft (3) which locate in corresponding cutouts in the mobile telephone housing and a sealing ring (5) and
positioning cams (6) running in the longitudinal direction of the shaft (2) being integrated below the head (3), and
that the opening features a recess (9) for accommodating the sealing ring (5) and positioning grooves (10) for the positioning cams (6).

2. Mobile telephone in accordance with claim 1,
**characterized in that**
the sealing ring (5) and the positioning cams (6) are made of a soft rubber-like material.

3. Mobile telephone in accordance with claim 1 or 2,
**characterized in that**
retaining lugs (7), running in the direction of its circumference are arranged on the shaft (2).

## Revendications

1. Téléphone mobile avec un compartiment pour accu, qui peut être fermé au moyen d'un couvercle pour compartiment d'accu,
**caractérisé**
**en ce que** le couvercle pour compartiment d'accu (8) présente une ouverture dans laquelle une partie de fermeture (1) peut être emboîtée dans une position prédéfinie, en ce que la partie de fermeture (1) comprend une tige (2) avec une tête (3), des cames d'encliquetage (4) opposées, qui s'engagent dans des logements correspondants sur le boîtier du téléphone mobile, étant disposées sur l'extrémité libre de la tige (3) et une bague d'étanchéité (5) et des cames de positionnement (6) agencées dans le sens longitudinal de la tige étant intégrées au-dessous de la tête (3), et
**en ce que** l'ouverture présente une cavité (9) pour le logement de la bague d'étanchéité (5) et des rainures de positionnement (10) pour les cames de positionnement (6).

2. Téléphone mobile selon la revendication 1,
**caractérisé en ce que**
la bague d'étanchéité (5) et les cames de positionnement (6) sont à base d'un matériau souple et similaire au caoutchouc.

3. Téléphone mobile selon la revendication 1 ou 2,
**caractérisé en ce que**
des cames de blocage anti-perte (7) agencées dans le sens périphérique sont disposées sur la tige (2).
